# EUROPEAN PATENT APPLICATION

(11) **EP 4 154 951 A1**
(43) Date of publication of application: **29.03.2023**
(21) Application number: 21199041.1
(22) Date of filing: 27.09.2021
(51) Int. Cl.: A63B 69/16, A63B 71/06, A63B 24/00, B62J 6/00, G09B 19/00, A63B 71/00

(54) **TRAINING DEVICE FOR MOBILE SPORTS DEVICE**

(71) Applicant: Technische Universität München, 80333 München (DE)
(72) Inventor: Linke, Tim, 38444 Wolfsburg (DE); Gleißner, Julian, 82110 Germing (DE)
(74) Representative: Tautz & Schuhmacher

(57) **Abstract**

Provided is a training device which is configured to be arranged at a mobile sports device. The training device is configured to project a light signal onto an area of a ground at an alterable distance, preferably smaller than 10 m, in front of the training device, and to alter the alterable distance based on a comparison of a target speed and a current speed of the training device and/or based on a comparison of a target distance that should have been traveled at a current time and a distance actually traveled by the training device.

## Description

The present invention is directed to a training device which is configured to be arranged at a mobile sports device, and a mobile sports device comprising the training device.

Professional athletes rely on so called (human) pacemakers or pacesetters to achieve their set goals during competitions. A pacemaker or pacesetter is someone who leads another athlete for a predetermined part of a race, such as a marathon or a cycle race, to ensure that the athlete reaches his goals with respect to a predetermined speed and/or a predetermined time. Roger Bannister, the first man to run a mile in under four minutes, was supported by two pacesetters through his race in 1954. Eliud Kipchoge ran the marathon distance in under two hours in 2019 with the help of 41 professional runners to set his pace. These efforts, which are essential to reach new records, require vast resources. An amateur athlete is often unable to acquire similar circumstances for his or her personal training.

Therefore, different approaches with the aim of replacing a human pacemaker by certain training devices are disclosed in the state of the art.

US 10,905,932 B2 discloses a system for pacing a runner around a running track at a predetermined pace with a moving visual light cue. The system comprises at least one light strip that is positioned in sight of at least one running lane of the running track, the at least one light strip containing a plurality of light elements; a dynamically updateable controller for the at least one light strip, the dynamically updateable controller further configured to track a position of the runner on the running track and selectively light one or more of the plurality of light elements of the at least one light strip in a sequence thereby giving the moving visual cue to the runner of the predetermined pace around the running track; a transmitter carried by the runner, the transmitter configured to send selective command signals from the runner to the dynamically updateable controller to dynamically update the predetermined pace, the moving visual light cue, or other attribute, and the dynamically updateable controller further includes a receiver for the selective command signals sent from the runner.

One of the drawbacks of the system disclosed in US 10,905,932 B2 is that the system is stationary/non-portable and must be installed prior to each training or, if the system is installed permanently at the same place, the athlete is limited to one training site.

EP 2 150 318 B1 discloses a personal training device for a participant of pace-based physical training. The personal training device comprises an input for receiving an input signal indicative of a pace of the participant; a comparator coupled to the input for comparing the pace of the participant to a predefined criteria; a training partner positioner for generating a position of a virtual training partner relative to the participant based on an output of the comparator; a training partner audio source for providing audio representative of sounds made by the virtual training partner based on the type of pace-based training by the participant; a spatial audio processor for producing a multi-dimensional audio signal comprising the audio from the audio source, the multi-dimensional audio signal providing the audio at a spatial location represented by the position generated by the training partner positioner, wherein the audio provided by the training partner audio source includes the sound of footsteps of the virtual training partner, and wherein the training partner audio source is configured to vary the frequency of the footsteps as a function of a change in position of the virtual training partner.

One of the drawbacks of the device disclosed in EP 2 150 318 B1 is that the device relies on audio feedback which might cause a safety risk because the athlete can be scared by the audio feedback and/or miss sounds of his surrounding such as a honk of another road user.

In the light of this state of the art, one of the objects of the present invention is to provide a device being configured to overcome the above-described disadvantages of the state of the art.

The object is solved by the features of the independent claims. That is, the problem is solved by a training device which is configured to be arranged at a mobile sports device according to claim 1 and by a mobile sports device with the training device according to claim 15. The dependent claims contain preferred further developments of the invention.

More specifically, according to a first aspect of the invention, the object is solved by a training device which is configured to be arranged at a mobile sports device.

In other words, a training device is provided which is configured to be mounted on a mobile sports apparatus/device preferably for tempo-based training with the training device.

The aim of the training device is to replace a human pacemaker. The training device may also be called pacemaker device. The training device is a light signaling system configured to help athletes pursue their optimal pacing strategies.

The mobile sports device may be a bicycle, e.g. a race bike, or a wheelchair. The training device may comprise a mount/mounting structure and may be mounted via the mount on the bicycle. More specifically, the training device may comprise a handlebar mount and may be mounted via the handlebar mount on a handlebar of the bicycle.

The training device may be manufactured using 3D-printing methods complying with a lightweight and durable construction demanded by e.g. the cycling market. The training device may be a portable device and thus may travel along with the athlete and thus may be used geographically independent.

The training device is configured to project a light signal onto an area of a ground at an alterable distance, preferably smaller than 10 m, in front of the training device.

That is, the light signal may be displayed in front of the training device, wherein the training device is configured to alter/change a distance of the displayed light signal to the training device. The ground may be a surface of a road.

The training device may comprise a casing mechanically ensuring that the light signal cannot be displayed further than 10 meters ahead of the training device, and thus it can be avoided that the light signal can endanger surrounding objects.

The training device may be mounted on the mobile sports device such that the light signal is displayed (as seen in a direction of movement of the mobile sports device) in front of the mobile sports device.

The front of the mobile sports device may be defined as an area located in a field of vision/view of a user of the sports device during a normal operation of the mobile sports device (when the training device is arranged at the sports device). If the training device is mounted on the bicycle, in particular on the handlebar of the bicycle, the light signal may be displayed in an area located substantially in extension of a top tube of the bicycle. More specifically, when the training device is mounted on the handlebar of the bicycle and the handlebar is turned, the training device is turned together with the handlebar and the light signal is displayed substantially in extension to a head tube of the bicycle, i.e., the light signal is moved together with the handlebar. The top tube or cross-bar connects a top of the head tube to a top of a seat tube of the bicycle. The handlebar is mounted on an upper end of the head tube and a fork being connected to a front wheel of the bicycle is mounted on a lower end of the head tube.

The training device is configured to alter the alterable distance based on a comparison of a target speed and a current speed of the training device. Additionally or alternatively, the training device is configured to alter the alterable distance based on a comparison of a target distance that should have been traveled at a current time and a distance actually traveled by the training device.

Comparing the target speed and the current speed of the training device may include determining a difference between the (predeterminable) target speed (value) and the current speed (value) of the training device, preferably taking into account a predeterminable/set speed strategy. In case the training device is mounted on the mobile sports device, the current speed of the training device may be equal to a current speed of the mobile sports device.

The above described training device presents a low cost, intuitive signaling system to allow athletes to optimize their pacing methods and is especially applicable to the sport of cycling or wheelchair racing but is not limited thereto.

The training device may comprise a light source, preferably a laser light source, configured to project the light signal, preferably a light spot, onto the area of the ground at the alterable distance in front of the training device.

In other words, the training device, which may be arranged on the mobile sports device, may be configured to project the light signal, preferably the light spot, onto the area of the ground at the alterable distance in front of the mobile sports device by means of the light source in an operating state of the training device.

Therefore, the training device may comprise a control unit which is connected to the light source and is configured to provide an actuating signal to the light source in the operating state of the training device arranged on the mobile sports device. That is, the actuating signal may be capable of changing/altering said alterable distance by means of the light source.

The light source may have one degree of freedom for altering the alterable distance in front of the training device.

It is possible that the light source is configured to project the light signal directly onto the area of the ground at the alterable distance in front of the training device, especially by means of said laser light source. Additionally or alternatively, the light source may be configured to project the light signal indirectly onto the area of the ground at the alterable distance in front of the training device, especially by means of said laser light source.

In case the light signal is projected indirectly onto the area of the ground at the alterable distance in front of the training device, especially by means of said laser light source, the light source may comprise a reflective system/element, such as a mirror. The reflective element may be arranged in a(n) light/optical path of the laser light source. In other words, the training device, especially the light source, may include a reflective element, e.g., a mirror, that is arranged and configured to reflect an emitted light beam, direct the light beam onto the ground, and thus, especially by pivoting about a pivot axis, alter the alterable distance of the light signal.

The training device may comprise a power source and/or may comprise a power input interface, e.g., an USB port, for powering at least the light source. In case the power input interface/port is provided, an external power source, such as a smartphone, may be connected to the training device via the power input interface. The external power source may be mounted below the training device. It is possible that the training device is configured to receive software updates via the power input interface.

It is possible that an actuator or servomotor is provided to alter said alterable distance. In case the light signal is projected directly onto the area of the ground at the alterable distance in front of the training device by means of said laser light source, the actuator may be connected to said control unit and to the laser light source. The control unit may be configured to provide said actuating signal to the actuator. The actuator may be configured to actuate the laser light source based on the actuating signal received from the control unit. The laser light source may be mounted to an output axle of the actuator and actuating the laser light source by means of the actuator may include turning said output axle, thereby changing/altering an angle between a light emitting direction of the light source and the ground in front of the training device, to alter the alterable distance. In case the light signal is projected indirectly onto the area of the ground at the alterable distance in front of the training device by means of said laser light source, the actuator may be connected to said control unit and to said reflective element. The control unit may be configured to provide said actuating signal to the reflective element. The actuator may be configured to actuate the reflective element based on the actuating signal received from the control unit. The reflective element may be mounted to the output axle of the actuator and actuating the reflective element by means of the actuator may include turning said output axle, thereby changing/altering an angle between a direction of light reflection and the ground in front of the training device, to alter the alterable distance.

The training device may be configured to determine the target distance based on a current travel time of the training device and the target speed.

That is, the training device may be configured to calculate the target distance by multiplying the current travel time of the training device with the target speed. The target distance may be the distance the user/athlete using the mobile sports device wanted to reach until the current/actual time.

The training device may comprise, as a first operating mode, an instantaneous mode in which the training device is configured to increase the alterable distance if the target speed is higher than the current speed and to decrease the alterable distance if the target speed is lower than the current speed.

In other words, the training device may be configured to determine the current speed/velocity of an athlete by determining, e.g. measuring, the current speed of the training device directly or indirectly by determining the current speed of the mobile sports device, and to adjust a position of the light signal according to the target speed. If the current speed is lower than/below the target speed, the light signal will distance itself from the athlete, i.e. from the training device, in a forward/moving direction. If the current speed is higher than/above the target speed, the light signal will get closer to the athlete, i.e. to the training device. In case the training device is mounted on the bicycle, the light signal will distance itself from the front wheel of the bicycle if the current speed is lower than the target speed, and will get closer to the front wheel of the bicycle if the current speed is higher than the target speed. This is called the instantaneous mode since solely the current speed of the training device and the target speed is taken into account when altering the alterable distance.

The training device may comprise, as a second operating mode, an accumulative mode in which the training device is configured to increase the alterable distance if the target distance is greater than the distance actually traveled by the training device in a predetermined time interval and to decrease the alterable distance if the target distance is smaller than the distance actually traveled by the training device in the predetermined time interval.

That is, in the accumulative mode, a comparison between the actually traveled distance, in case of the bicycle the actually ridden distance, and a distance the athlete should have traveled in the predetermined time interval, e.g., from the start of the training until an actual point in time, is carried out. This does not solely reflect the current/actual situation but also takes into account historical speed data. More specifically, if the current speed of the training device/athlete is lower than the target speed but an overall distance the training device/athlete traveled is greater than the target distance (e.g., determined by multiplying the target speed and a current training duration), then the alterable distance will not be increased in the accumulative mode (and vice versa). In the same situation in the instantaneous mode, the alterable distance will be increased since the current speed is below the target speed and the historical data is not taken into account. Therefore, the accumulative mode is particularly recommended when the velocity/speed of the training device varies strongly, e.g. for rides in hilly terrain.

The training device may comprise a user input interface for receiving user input with respect to the target speed. The training device may be configured to set the target speed based on the user input received via the user input interface.

That is, the user input interface may also be called human machine interface that allows the user/athlete to set the target speed. In general, the user input may be any kind of user input such as audio, haptic and/or visual input.

The user input interface may comprise a first button, wherein the training device is configured to decrease the target speed when the first button is pushed by the user.

The user input interface may comprise a second button, wherein the training device is configured to increase the target speed when the second button is pushed by the user.

The user input interface may be configured to receive user input with respect to the operating mode, wherein the training device is configured to set the instantaneous mode and the accumulative mode based on the user input received via the user input interface.

The user input interface may comprise a third button, wherein the training device is configured to switch between the instantaneous mode and the accumulative mode of the training device when the third button is pushed by the user.

In particular, the user input interface may be provided on a side of the training device opposite to a side where the mount of the training device via which the training device may be fixed/mounted to the mobile sports device is provided.

It is also possible that one, some or all of the buttons/keys are assigned twice, e.g., by pushing the first button for more than a predefined time may cause the training device to switch between the operating states.

The above described buttons may be mechanical buttons that provide a feedback upon pressing such that the user/athlete does not have to look at the training device to know if its input operation was successful. This is especially beneficial when the training device is mounted on the bicycle such that the rider can pay attention to the surrounding traffic while riding.

The training device, preferably the user input interface, may be configured to receive the user input from an external control unit, preferably a smartphone.

That is, an external control unit may be connected to the user input interface and/or the training device via wire and/or wirelessly and may allow the user of the training device to send control signals via the external control unit to the training device to set the target speed and/or to switch between the two operating modes.

The target speed, and therefore also the target distance, may change over time according to a target speed profile. That is, the target speed is not necessarily limited to a single value but there may be a certain/predefined target speed profile comprising multiple target speed values. These target speed values may change during the duration of the training, e.g., when a certain location is reached and/or after a predefined time after start of the training. The target speed profile may be set using the above described external control unit, e.g. comprising a dedicated software application on a portable device.

The training device may comprise a display unit configured to display the target speed, and preferably the current operating mode of the training device.

The display unit, which may comprise any kind of display technology such as an OLED or LC display, may be provided above said input interface. The input interface may comprise a brightness adjustment key for the display unit and/or the display unit may be configured to do brightness adjustment automatically based on a brightness of a surrounding of the training device. Alternatively or additionally, the input interface may comprise a key, e.g., a rotary stick, for adjusting the contrast of the display unit. The display unit may be embedded into the casing of the training device to provide shaded views at almost all sun angles.

The training device may comprise a speed sensor, preferably configured to be arranged at the mobile sports device, configured to sense the current speed of the training device.

Additionally or alternatively, the training device may be connectable to a speed sensor providing the current speed as an input information to the training device. The speed sensor may be mounted on the mobile sports device and/or may be part of the above described external control unit.

According to a second aspect of the invention, a mobile sports device, preferably a bicycle or a wheelchair, is provided. The mobile sports device comprises the above described training device. In case the bicycle is provided, the training device may be mounted to the handle bar of the bicycle.

The description given above with respect to the training device applies mutatis mutandis to the mobile sports device and vice versa.

In the following, a description of an embodiment of the present invention is given with respect to figures 1 to 5.
- Fig. 1: depicts schematically a training device mounted on a mobile sports device,
- Fig. 2: depicts schematically a top view of the training device,
- Fig. 3: depicts schematically a perspective side view of the training device,
- Fig. 4: depicts schematically a front view of the training device, and
- Fig. 5: depicts schematically an interior of the training device.

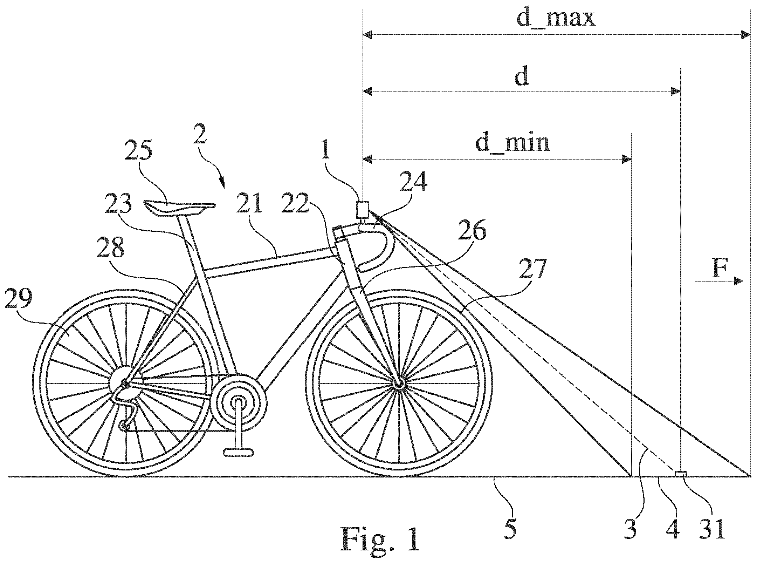

In figure 1 a system comprising a training device 1 and a mobile sports device, here a bicycle 2, is shown in a side view.

The bicycle 2 comprises a top tube 21, a head tube 22 and a seat tube 23 for taking up a seat 25 of the bicycle 2, wherein the seat tube 23 is connected via the top tube 21 to the head tube 22. On top of the head tube 22 a handlebar 24 is mounted. On a lower end of the head tube 22 a front fork 26 is mounted being supported by a front wheel 27 of the bicycle 2. The seat tube 23 is connected via a rear fork 28 to a rear wheel 29 of the bicycle 2.

The training device 1 comprises a handlebar mount (not shown) connecting the training device 1 to the handlebar 24 of the bicycle 2 such that the training device 1 is arranged at a front of the bicycle 2.

The training device 1 is configured to project a light signal 3, here a light spot 31, onto an area 4 of a ground 5 at an alterable distance d in front of the training device 1, i.e., in front of the bicycle 2, such that the light spot 31 is visible to a rider (not shown) of the bicycle 2 during riding the bicycle 2 and looking in a main driving/moving direction F of the bicycle 2. In case the bicycle 2 goes straight, a trajectory of the bicycle 2 and a trajectory of the light signal 3 is substantially the same, wherein the trajectory of the bicycle 2 may deviate from the trajectory of the light signal 3 when the bicycle drives through a curve.

The training device 1 is further configured to alter the alterable distance d based on a comparison of a target speed and a current speed of the training device 1 and/or based on a comparison of a target distance that should have been traveled at a current time and a distance actually traveled by the training device 1.

In the present case, a maximum distance d_max of the alterable distance d is set to 10 m. The maximum distance d_max is set to 10 m to avoid irritations of other road users and a minimum distance d_min is set such that the light spot 31 is still visible for the rider of the bicycle 2 (and not projected onto the front wheel 27 or any other part of the bicycle 2). If d_max or d_min is reached, the light signal 3 stops at the maximum distance d_max or the minimum distance d_min (e.g., controlled by software). That is, the area 4 within which the light spot 31 may be displayed has a length of d_max - d_min.

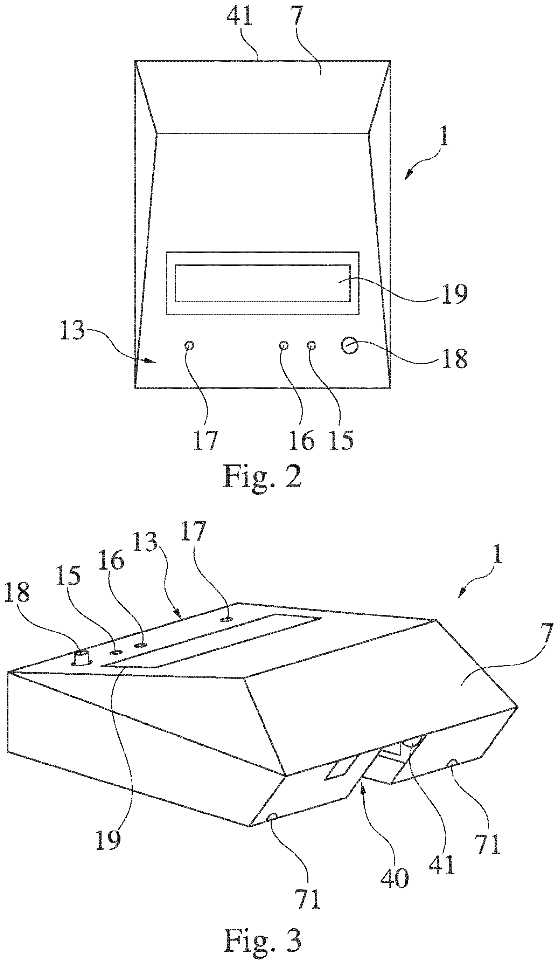

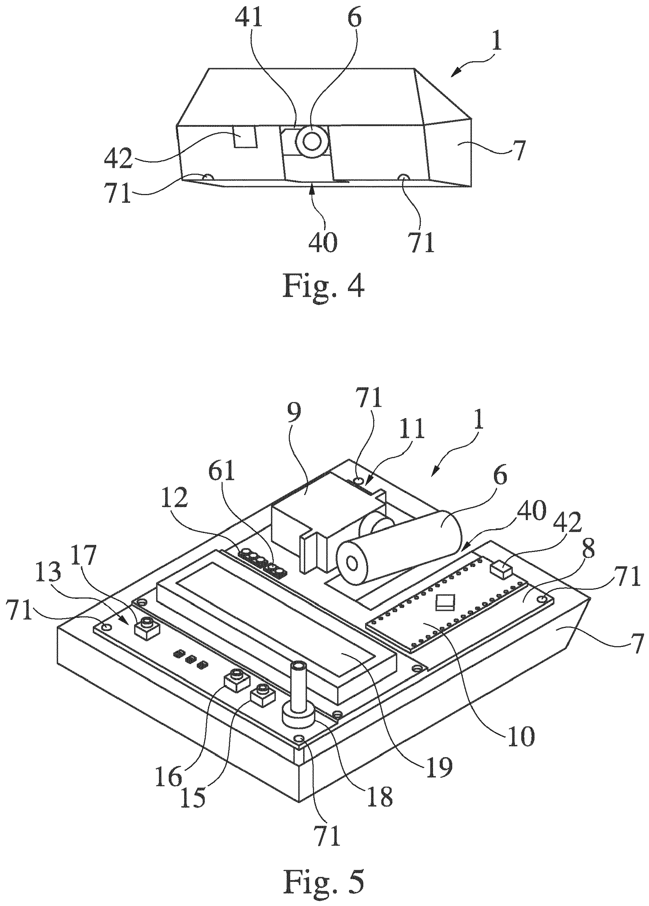

In the following the training device 1 will be explained in detail with respect to figures 2 to 5. Figure 2 shows the training device 1 from the rider's perspective, i.e., shows a top view of the training device 1. Figure 3 shows a perspective side view of the training device 1. Figure 4 shows a front of the training device 1 from an opposite direction to the main driving/moving direction F (when the training device 1 is attached to the bicycle 2 as shown in figure 1). An interior of the training device 1 can be seen in figure 5.

The training device 1 comprises a housing/casing 7 accommodating a printed circuit board 8. Interior screws 71, embedded in the housing 7 as seen towards the bottom of figure 3 and 4 as well as in figure 5, connect a bottom and top side of the housing 7 with an interior comprising the printed circuit board 8.

As can be gathered from figures 4 and 5, the training device 1 comprises a laser light source 6. The laser light source 6 comprises a power input 61 on the printed circuit board 8 and is configured to project the light spot 31 onto the area 4 of the ground 5 at the alterable distance d in front of the training device 1.

The front view, as portrayed in figure 4, shows the laser light source 6 as well as a power input 42 for the training device 1. In the present embodiment, the training device 1 receives power/electrical energy via the power input 42. However, additionally or alternatively, the training device 1 may comprise an energy storage unit, such as a battery and/or an accumulator.

The laser light source 6 has one degree of freedom for altering the alterable distance d in front of the training device 1. Here the laser light source 6 is mounted on an output axle of an actuator 9, here an electric motor, wherein the actuator 9 is mounted on the printed circuit board 8. The output axle of the actuator 9 runs substantially in parallel to a horizontal. By turning the output axle actuated by the actuator 9, the light spot 31 gets closer to the training device 1 or moves away from the training device 1 depending on a direction of rotation of the output axle. Thereby the alterable distance d can be altered by the training device 1.

The actuator 9 is controlled by a control/actuating signal received from a control unit 10, e.g., a micro controller, mounted on the circuit board 8 (see figure 5). The actuator 9 is connected to the control unit 10 via a connecting port 12 mounted on the printed circuit board 8.

The control unit 10 receives the current speed of the training device 1 via an input port 11 also mounted on the printed circuit board 8. The current speed of the training device 1 is here equal to the current speed of the bicycle 2 and may be measured by an external speed sensor (not shown) mounted on the bicycle 2. It is possible that the training device 1 turns on when a motion thereof is detected. Turning off may be controlled using a timer within a software of the training device 1.

The control unit 10 is also connected to a user input interface 13 which is mounted to the printed circuit board 8 accommodated in the housing 7 of the training device 1 (see figures 2, 3 and 5).

The control unit 10 receives user input with respect to the target speed and with respect to two operating modes of the training device 1, here an instantaneous mode and an accumulative mode, via the user input interface 13.

The control unit 10 is configured to set/adapt the target speed and is also configured to set/switch between the two operating modes based on the user input received via the user input interface 13.

The user input interface 13 comprises three push buttons 15, 16, 17 for adjusting/setting the target speed and the operating mode, and a contrast adjustment unit 18, here comprising a potentiometer, for adjusting a contrast of a display unit 19 by turning a rotary stick of the contrast adjustment unit 18 (see figures 2, 3 and 5). The display unit 19 is mounted on the printed circuit board 8.

More specifically, when a first button 15 of the three buttons 15, 16, 17 is pushed by the user, the control unit 10 is configured to decrease the target speed. When a second button 16 of the three buttons 15, 16, 17 is pushed by the user, the control unit 10 is configured to increase the target speed. When a third button 17 of the three buttons 15, 16, 17 is pushed by the user, the control unit 10 is configured to switch between the instantaneous mode and the accumulative mode of the training device 1.

The three buttons 15, 16, 17 as well as the contrast adjustment unit 18 are arranged below the display unit 19. Here, the user input interface 13 is kept rather simple to avoid distractions while riding.

However, it is also possible, additionally or alternatively, that the user input interface 13 and/or the control unit 10 is/are configured to receive the user input from an external control unit (not shown), e.g., a smartphone.

The external control unit may comprise a (software) application configured to determine a speed value and to send this speed value and/or an information related to this speed value to the user input interface 13 and/or the control unit 10. Said speed value may vary over time, i.e., the target speed may change over time according to a target speed profile.

The external control unit may be connected, preferably wirelessly, to other external control units, e.g., via a server. The external control unit may receive a speed of at least one other user of another training device and may be configured to set the target speed based on the received speed of said other user. This may be done in real time. This may enable the user of the training device 1 to race other cyclists, preferably in real-time.

The display unit 19 is configured to display the current target speed and the current operating mode of the training device 1 (not shown). The display unit 19 is embedded into the housing 7 to provide shaded views at almost all sun angles.

The control unit 10 adjusts the alterable distance d based on the target speed and the set operating mode.

In the instantaneous mode, the control unit 10 increases the alterable distance d if the target speed is higher than the current speed and decreases the alterable distance d if the target speed is lower than the current speed.

Therefore, the control unit 10 compares the target speed to the current speed of the training device 1 to determine a difference between these two speed values and sends a corresponding control signal to the actuator 9 based on the determined difference.

In the second operating mode of the training device 1, i.e., in the accumulative mode, the control unit 10 is configured to increase the alterable distance d if the target distance is greater than the distance actually traveled by the training device 1 in a predetermined time interval and to decrease the alterable distance d if the target distance is smaller than the distance actually traveled by the training device 1 in the predetermined time interval.

In the accumulative mode, the control unit 10 determines the target distance based on the target speed and a current travel time of the training device 1, e.g., a duration from starting a training with the training device 1 until the current time.

In the accumulative mode, the control unit 10 also determines the distance actually traveled by the training device 1. This might be done based on the actually ridden speed and the current travel time of the training device 1.

The control unit 10 compares the target distance to the distance actually traveled by the training device 1 to determine a difference between these two distance values and sends a corresponding control signal to the actuator 9.

Based on the received control signal, irrespective of the operating mode, the actuator 9 turns its output axle to either increase or decrease the alterable distance d in the above described manner (by pivoting the laser light source 6 relative to the handlebar 24).

The housing 7 comprises a recess 40 with a blind 41 on top of the recess 40 (see figures 3 and 4) for the laser light source 6. If d_max is exceeded due to an (software and/or hardware) error, the light signal 3 is projected onto the blind 41 instead of the area 4 of the ground 5 (see figure 1). By providing the blind 41 it is ensured that the alterable distance d does not exceed the maximum distance d_max.

### Reference signs list

- 1: training device
- 2: bicycle
- 21: top tube
- 22: head tube
- 23: seat tube
- 24: handlebar
- 25: seat
- 26: front fork
- 27: front wheel
- 28: rear fork
- 29: rear wheel
- 3: light signal
- 31: light spot
- 4: area for light spot
- 5: ground
- 6: (laser) light source
- 61: power input for light source
- 7: housing/casing
- 71: screws
- 8: printed circuit board
- 9: actuator
- 10: (internal) control unit
- 11: input port
- 12: connecting port
- 13: user input interface
- 15: first input button
- 16: second input button
- 17: third input button
- 18: contrast adjustment unit
- 19: display unit
- 40: recess for light source
- 41: blind
- 42: power input

- d: alterable distance
- d_min: minimum distance
- d_max: maximum distance
- F: main driving direction of bicycle

## Claims

1. A training device (1), wherein the training device (1) is configured to:
- be arranged at a mobile sports device (2),
- project a light signal (3) onto an area (4) of a ground (5) at an alterable distance (d), preferably smaller than 10 m, in front of the training device (1), and
- alter the alterable distance (d) based on a comparison of a target speed and a current speed of the training device (1) and/or based on a comparison of a target distance that should have been traveled at a current time and a distance actually traveled by the training device (1).

2. The training device (1) according to claim 1, wherein the training device (1) comprises a light source (6), preferably a laser light source, configured to project the light signal (3), preferably a light spot (31), onto the area (4) of the ground (5) at the alterable distance (d) in front of the training device (1).

3. The training device (1) according to claim 2, wherein the light source (6) has one degree of freedom for alter the alterable distance (d) in front of the training device (1).

4. The training device (1) according to any of claims 1 to 3, wherein the training device (1) is configured to determine the target distance based on a current travel time of the training device (1) and the target speed.

5. The training device (1) according to any of claims 1 to 4, wherein the training device (1) comprises, as a first operating mode, an instantaneous mode in which the training device (1) is configured to increase the alterable distance (d) if the target speed is higher than the current speed and to decrease the alterable distance (d) if the target speed is lower than the current speed.

6. The training device (1) according to any of claims 1 to 5, wherein the training device (1) comprises, as a second operating mode, an accumulative mode in which the training device (1) is configured to increase the alterable distance (d) if the target distance is greater than the distance actually traveled by the training device in a predetermined time interval and to decrease the alterable distance (d) if the target distance is smaller than the distance actually traveled by the training device (1) in the predetermined time interval.

7. The training device (1) according to any of claims 1 to 6, wherein the training device (1) comprises a user input interface (13) for receiving user input with respect to the target speed and wherein the training device (1) is configured to set the target speed based on the user input received via the user interface (13).

8. The training device (1) according to claim 7, wherein the user input interface (13) comprises a first button (15) and wherein the training device (1) is configured to decrease the target speed when the first button (15) is pushed by the user.

9. The training device (1) according to claim 8, wherein the user input interface (13) comprises a second button (16) and wherein the training device (1) is configured to increase the target speed when the second button (16) is pushed by the user.

10. The training device (1) according to any of claims 7 to 9, wherein the user input interface (13) is configured to receive user input with respect to the operating mode and wherein the training device (1) is configured to set the instantaneous mode and the accumulative mode based on the user input received via the user input interface (13).

11. The training device (1) according to claim 10, wherein the user input interface (13) comprises a third button(17) and wherein the training device (1) is configured to switch between the instantaneous mode and the accumulative mode of the training device (1) when the third button (17) is pushed by the user.

12. The training device (1) according to any of claims 1 to 11, wherein the user the training device (1), preferably the user input interface (13), is configured to receive the user input from an external control unit, preferably a smartphone.

13. The training device (1) according to any of claims 1 to 12, wherein the target speed changes over time according to a target speed profile.

14. The training device (1) according to any of claims 1 to 13, wherein the training device (1) comprises a display unit (19) configured to display the target speed, and preferably the current operating mode of the training device, and/or the training device (1) comprises a speed sensor, preferably configured to be arranged at the mobile sports device (2), configured to sense the current speed of the training device (1).

15. A mobile sports device (2), preferably a bicycle or a wheelchair, comprising the training device (1) according to any of claims 1 to 14.
